# EUROPEAN PATENT SPECIFICATION

(11) **EP 4 548 438 B1**
(45) Date of publication and mention of the grant of the patent: **25.03.2026**
(21) Application number: 23764696.3
(22) Date of filing: 29.06.2023
(51) Int. Cl.: H02G 1/10, H02G 9/02

(54) **CONNECTION ARRANGEMENTS FOR MARINE ENERGY INSTALLATIONS**
VERBINDUNGSANORDNUNGEN FÜR MEERESENERGIEANLAGEN
CONNECTION ARRANGEMENTS FOR MARINE ENERGY INSTALLATIONS

(30) Priority: 30.06.2022 GB 202209620
(43) Date of publication of application: 07.05.2025
(73) Proprietor: Acergy France SAS, 92150 Suresnes (FR)
(72) Inventor: LEGRAND, Mathurin Michel Pierre, 75017 Paris (FR); VIELLARD, Brice Helier, 92100 Boulogne-Billancourt (FR)
(74) Representative: Keltie LLP
(86) International application number: PCT/IB2023/000400
(87) International publication number: WO 2024/003616

(56) References cited:
- WO-A2-2013/050755
- GB-A- 2 586 799

## Description

This invention relates to connection arrangements for marine installations that generate electrical power from renewable sources. The most common of such installations are offshore wind farms comprising multiple wind turbines.

Offshore wind farms will be used in this specification to exemplify the invention but other power generator units that convert wave, tidal or solar energy could be used within the inventive concept, in addition to or instead of wind turbines. Thus, installations of the invention are not limited to wind farms but could encompass other marine installations that gather power produced by multiple generator units spaced apart across a body of water.

An offshore wind farm comprises one or more groups or arrays of wind turbines. In shallow water, wind turbines can be fixed rigidly to the seabed with simple foundations such as monopiles. However, there is a trend toward installation of wind turbines further offshore in deeper water where average winds are stronger and steadier and where very large and efficient turbines can be installed with fewer concerns regarding visual impact or noise pollution. With increasing water depth, floating wind turbine solutions become necessary. In that case, offshore wind turbines may be supported by platforms, rafts, floats or buoys moored to the seabed.

The turbines of an array are typically connected in series or in parallel to one or more transformers or substations. The or each substation may be located underwater or at the surface. Electrical power generated by the turbines is exported from the or each substation to consumers, most commonly via a subsea export cable that is connected eventually to a national grid.

Electrical connections to convey power from offshore wind turbines to substations and then to export the power to consumers require various arrangements of cables located underwater. Specifically, there is at least one subsea inter-array cable network within the wind farm in addition to at least one subsea export cable that conveys power from the installation to the shore.

The inter-array cables may be a mix of static cables and dynamic cables. Static cables are laid on the seabed or otherwise relatively deep in the water column where they can remain substantially stationary and possibly undisturbed for the operational life of the wind farm. Conversely, dynamic cables extend upwardly through the water column toward wind turbines at the surface. Dynamic cables are therefore designed to resist dynamic stresses that tend to induce fatigue, notably repetitive deflections caused by water motion such as waves.

Dynamic cables comprise additional reinforcement or armouring layers to withstand dynamic stresses arising from motion of the surrounding water. Such provisions make dynamic cables much more expensive than static cables; they also mean that for a given cross-sectional area, dynamic cables are rated to handle less electrical power than static cables. In other words, to handle the same electrical power as a static cable, the cross-section of a dynamic cable would have to be enlarged substantially. This would further increase not just the cost of a dynamic cable but also its weight and bulk, which makes the cable more challenging to transport and to install. It is therefore desirable to minimise the length and cross-section of dynamic cables.

In wind farms comprising fixed wind turbines in shallow water, only a short length of cable connecting to each wind turbine need be exposed to water motion. Indeed, a cable connecting to a fixed wind turbine can be attached to or housed inside the foundation and therefore can be supported against movement driven by water dynamics. In that case, a dynamic cable may not be necessary.

However, floating wind turbines situated in deeper water inevitably require connection via dynamic cables that extend through the water column and are exposed to water motion. Those cables must be lengthy to accommodate the water depth and must be robust enough to handle the more dynamic environment of deep water, far offshore. Another factor that increases the length and cost of dynamic cables in offshore environments is the greater spacing that is typically required between larger turbines with greater rotor diameters.

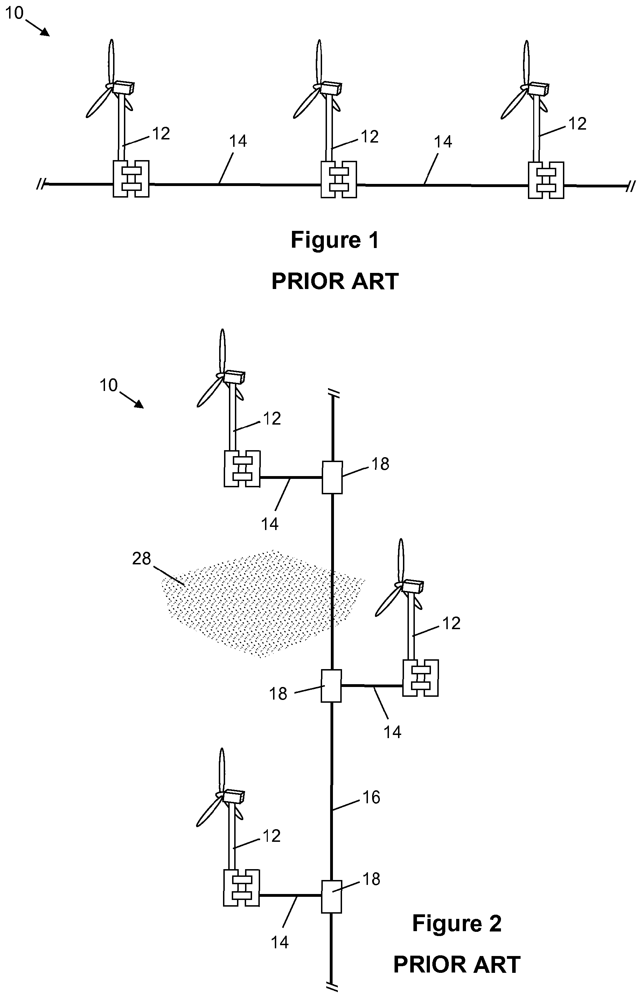

Figures 1 to 3 illustrate prior art inter-array cable arrangements used in floating wind turbine installations, in particular, series and parallel arrangements for electrical interconnection within groups 10 of floating offshore wind turbines 12. In the group 10 shown in Figure 1, the turbines 12 are connected in series by dynamic cables 14 in a daisy-chain arrangement. Conversely, the group 10 of Figure 2 shows the turbines 12 connected in parallel. In that case, each turbine 12 is connected to a static cable 16 by a respective dynamic cable 14 that connects to a respective junction box or connector 18 on the static cable 16.

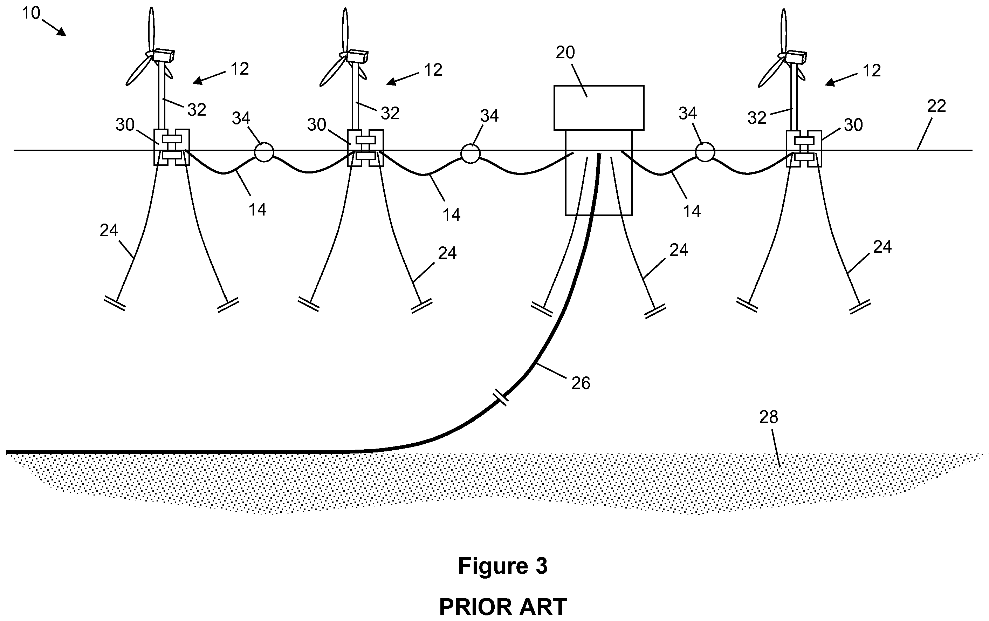

Figure 3 further exemplifies the prior art by showing turbines 12 connected in series by dynamic cables 14, that series also including a substation hub 20 that gathers electrical energy directly or indirectly from each turbine 12. In this example, the turbines 12 and the hub 20 all float at the surface of the water 22, kept on station by respective sets of moorings 24. An export cable 26 hangs as a catenary from the hub 20 to the seabed 28 to transfer the electrical energy to a consumer.

Each turbine 12 comprises a buoyant base 30 surmounted by an upper structure 32. The upper structure 32 comprises a mast or tower surmounted by a nacelle that supports a rotor comprising a hub and a set of blades.

One approach to reduce the length of dynamic cables 14, as shown in Figures 1 and 3, is to effect direct connection between offshore wind turbines 12. In the side view of Figure 3, the dynamic cables 14 are shown suspended in the water 22 between turbines 12 by one or more discrete buoys 34. However, that approach is only practical for short-distance connections between turbines 12 that are close together and where the wind farm architecture allows for serial connection of units. The dynamic cables 14 are also more exposed to water motion due to their near-surface location, which tends to offset the savings of reduced length with a need for greater robustness.

There is an increased operational risk in a daisy-chain system because at least some of the wind turbines 12 must support at least two dynamic cables 14, and because the system is vulnerable to the loss or removal of any dynamic cable 14 or turbine 12.

Another approach to reduce the length of dynamic cables 14 is known in the art as a 'fishbone' configuration as shown in Figure 2. In that configuration, a main static cable 16 runs on the seabed 28 like a spine and comprises a series of connectors 18 spaced apart along its length. Dynamic cables 14 extending like ribs from respective ones of the connectors 18 to individual wind turbines 12 connect the wind turbines 12 to the static cable 16 via the connectors 18.

As each dynamic cable 14 of the fishbone configuration is connected to only one wind turbine 12, its cross section is helpfully minimised. However, such a solution requires 'wet' junction boxes or connectors 18 in which the necessary connections between the dynamic cables 14 and the static cable 16 via the connectors 18 are made underwater. The alternative is the additional retrieval step of using a 'dry' connector as described in EP 2732516, GB 2586799 and GB 2602462.

In this respect, a dry connector is simpler in construction than a wet connector 18, which requires sealing and engagement features that enable connections to be made underwater. This is because electrical connections are made above water in a dry environment aboard a vessel and the watertightness of those connections can be assured before returning the cables and connectors to the sea.

In the case of a conventional fishbone configuration like that shown in Figure 2, however, dry connectors would require the entire static cable 16 to be disturbed and lifted to the surface every time a dynamic cable 14 is to be connected to it. This takes time, costs money and increases operational risk, including the risk of damaging the static cable 16 by exposing it to additional and repeated stress. Also, an entire installation comprising a static cable 16 may need to be taken offline even to connect only one additional wind turbine 12.

It will also be apparent that a conventional fishbone configuration like that shown in Figure 2 does nothing to shorten the length or therefore to lessen the expense of the dynamic cables 14 that connect to the static cable 16. Moreover, if the installation is ever to be enlarged, it is not straightforward to add to the length of the static cable 16 or to increase the number of connectors 18 on the static cable 16 to accommodate additional wind turbines 12.

Against this background, the invention provides a subsea inter-array cable layout that comprises a series of two or more discrete cable sections extending in longitudinal succession along a common path. Each cable section may comprise a length of static cable. Each cable section comprises at least one longitudinal portion and at least one lateral portion. A cable bend may join the or each longitudinal portion to the at least one lateral portion.

The longitudinal portions of the cable sections extend along the path and lateral portions of mutually adjacent cable sections in the series extend laterally from the path to the same side of the path as a pair. A connection device connected to the lateral portions of the pair interconnects the adjacent cable sections and is spaced from the longitudinal portions by a distance greater than the local water depth.

The connection device may be configured for dry connection of the lateral portions and of at least one additional cable that can be connected to and extend from the connection device, for example in a lateral direction with respect to the longitudinal portions of the cable sections.

The or each additional cable suitably extends from the connection device to a floating surface unit. For example, the or each additional cable may extend to the floating surface unit as a catenary while a portion of the additional cable adjoining the connection device lies on the seabed. Thus, the or each additional cable comprises a section of dynamic cable whose length exceeds the local water depth. However, the or each additional cable could also comprise an inboard section of static cable in series with the section of dynamic cable.

The lateral portions of the pair may be substantially parallel and may be separate along their lengths extending from the longitudinal portions to the connection device. In that case, at least one of the additional cables could extend between the lateral portions of the pair.

The at least one lateral portion may extend laterally, for example substantially orthogonally, from an end of the or each longitudinal portion. Where each cable section comprises a longitudinal portion disposed between lateral portions at each end, those lateral portions may extend from the longitudinal portion in mutually opposed lateral directions. In that case, successive cable sections of the series may be reversed in shape longitudinally in alternation. For example, the cable sections can alternate between S and reverse-S shapes.

The or each longitudinal portion of each cable section may be substantially aligned at its ends on a common axis with facing ends of the longitudinal portions of adjacent cable sections in the series. The or each longitudinal portion of each cable section may be substantially longer, for example at least four times longer, than the or each lateral portion of each cable section.

The inventive concept embraces a marine installation for generating electrical power from a renewable source, the installation comprising at least one cable layout of the invention.

The inventive concept also embraces a corresponding method of installing a subsea inter-array cable layout. The method comprises: laying a series of two or more discrete cable sections on the seabed to extend in longitudinal succession along a common path, each cable section comprising at least one longitudinal portion and at least one lateral portion, wherein the longitudinal portions of the cable sections extend along the path and lateral portions of mutually adjacent cable sections in the series extend laterally from the path to the same side of the path as a pair; lifting outboard ends of the pair of lateral portions above the surface without lifting the longitudinal portions from the seabed; effecting dry connection of the lateral portions of the pair to a connection device above the surface; and lowering the connection device and the lateral portions to the seabed.

A catenary may be formed in an outboard part of the lateral portions when lifting their outboard ends above the surface, while leaving an inboard part of the lateral portions, adjoining the longitudinal portions, on the seabed.

At least one additional cable may be connected to the connection device, for example after supplying the or each additional cable from storage aboard a surface vessel. Dry connection of the or each additional cable to the connection device may be effected above the surface. The or each additional cable may then be lowered to the seabed connected to the connection device. Conveniently, the or each additional cable may be connected to the connection device when connecting the lateral portions to the connection device, or afterwards.

A free end of the or each additional cable may be lifted from the seabed to a unit floating at the surface before connecting the additional cable to the floating unit. A catenary may be formed in an outboard part of the or each additional cable when lifting its free or outboard end from the seabed, while leaving an inboard part of the or each additional cable, adjoining the connection device, on the seabed.

The or each additional cable may be provided in the form of a dynamic cable or in the form of a length of dynamic cable in series with a length of static cable. Conversely, the or each cable section may be provided in the form of a static cable.

In summary, the invention provides a field architecture solution for subsea power cables. The solution involves the following main components or elements, namely: floating units such as wind turbines that produce or receive electrical power or communications; a static or non-dynamic power cable divided into multiple sections; and dynamic power cables, each extending to a floating unit from a subsea connector that allows electrical connection of at least two of the sections of the static power cable and at least one of the dynamic power cables.

These elements are arranged such that the static cable sections extend from the main installation corridor toward each of the floating units over a length that is greater than the water depth at that location. Those static cable sections could be deployed before the subsea connectors and/or the dynamic cables are deployed. The static cable sections can be recovered onboard a dynamic cable line vessel that can perform electrical connection of the sections of the static cable and the dynamic cable via the subsea connector.

Connection of the dynamic cable to a floating unit can be made directly afterwards or at a later stage once one or more of the floating units are moored in the field. Meanwhile, the vessel can install or abandon the dynamic cable to the seabed together with the sections of the static cable and the subsea connector that connects them to the dynamic cable.

The solution of the invention benefits from the ability to disconnect a floating unit from an installation without jeopardising power production from other floating units of the installation. The invention reduces risk relating to multiple power risers to a single floating unit and optimises the installation sequence without requiring wet-mate connectors. Also, the invention limits the specification requirements for dynamic cables thanks to a single floating unit connection, and allows for deployment of qualified products for renewable prospects on short and medium timescales.

Embodiments of the invention provide a pattern of inter-array electrical cables, being subsea cables that link offshore wind turbines or other power generating units. The pattern comprises: at least two static cables on the seabed connected together to a connection device, wherein the connection device is at a distance from the longitudinal direction of the static cables that is at least equal to the water depth; and at least one dynamic cable extending between the connection device and a floating wind turbine.

The static cables may follow a main direction and comprise a curvature to connect to the connection device. The curvature may, for example, be substantially perpendicular to the main direction. Between the curvature and the connection device, the two static cables may be parallel, separate or attached together.

Embodiments of the invention also implement a method to install an inter-array network of cables connecting at least one floating wind turbine with at least one other facility, that facility being another wind turbine, a substation, another offshore facility or an export cable. The method comprises: pre-installing on the seabed at least two static cables connected together by a connection device able to connect to at least one another cable, wherein the static cables comprise a bend substantially perpendicular to their main direction and an overlength between the bend and the connection device at least equal to the water depth.

The floating wind turbine is installed in the vicinity of the connection device. The connection device is retrieved to the surface by moving the overlength of the cables, whereupon a dynamic cable is connected between the connection device and the floating wind turbine and the connection device is lowered back onto the seabed. Thus, the connection device may be a dry connector or a dry junction box.

The static cables may be laid within a predetermined corridor and follow a curvature leading outside that corridor to the connection device.

To summarise the invention, a subsea inter-array cable layout for marine power generation installations comprises a series of two or more discrete sections of static cable that extend in longitudinal succession along a common path. Each cable section comprises a longitudinal portion and at least one lateral portion. The longitudinal portions of the series extend along the path and lateral portions of adjacent cable sections extend laterally outwardly to the same side of the path, forming a pair.

Connection devices connect to each pair of lateral portions to interconnect the cable sections. The connection devices are spaced from the longitudinal portions by a distance greater than the local water depth so that outboard ends of the lateral portions can be lifted to the surface to effect dry connections with the connection devices without disturbing the longitudinal portions. Additionally, at least one dynamic cable extends from each connection device for connection to a floating unit such as a wind turbine.

To put the invention into context by illustrating the prior art, reference has already been made to Figures 1 to 3 of the drawings in which:
Figure 1 is a schematic plan view of a group of floating offshore wind turbines electrically connected in series;
Figure 2 is a schematic plan view of a group of floating offshore wind turbines electrically connected in parallel; and
Figure 3 is a schematic side view of a group of floating offshore wind turbines electrically connected in series to each other and to a floating substation hub, also showing mooring arrangements of the various floating units and an export cable extending from the hub.

In order that the invention may be more readily understood, reference will now be made, by way of example, to the remainder of the accompanying drawings in which:
Figure 4 is a schematic plan view of a group of floating offshore wind turbines electrically connected by cable arrangement of the invention;
Figure 5 corresponds to Figure 4 but shows an initial stage of installation of the group;
Figure 6 corresponds to Figure 5 but shows further stages of installation of the group;
Figures 7a to 7d are a sequence of schematic side views also showing various stages of installation of one of the wind turbines of the group; and
Figure 8 is a schematic plan view that shows a variant of the cable arrangement shown in Figure 4, applied to a larger group of wind turbines.

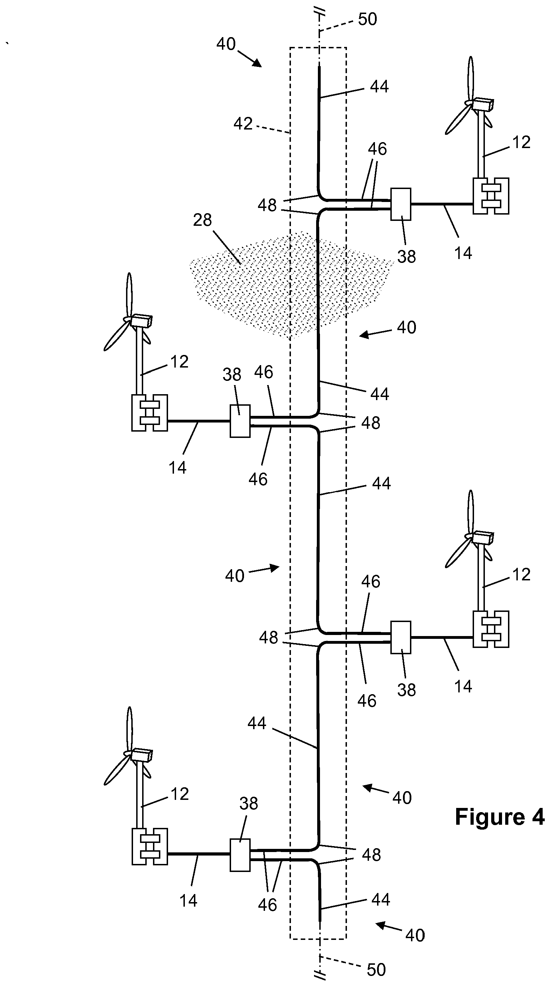

Referring next, then, to Figure 4 of the drawings, a cable arrangement 36 of the invention is broadly akin to the parallel arrangement shown in Figure 2. Like numerals are used for like features. Thus, dynamic cables 14 extending upwardly from the seabed 28 connect to respective ones of a group of wind turbines 12 floating at the surface. Typically, each dynamic cable 14 adopts a catenary shape with a lower portion lying on the seabed 28. At their lower ends, the dynamic cables 14 connect to subsea junction boxes 38 at respective longitudinally spaced positions on the seabed 28. Each junction box 38 connects the dynamic cables 14, in turn, to a central static cable that is laid on the seabed 28.

In this example, however, the static cable is formed by a series of discrete static cable sections 40 that are each connected to two of the junction boxes 38, one at each end of each cable section 40. The junction boxes 38 connect neighbouring cable sections 40 end-to-end in longitudinal succession and in series, in addition to connecting the wind turbines 12 to the cable sections 40 via the respective dynamic cables 14.

It will be apparent that the successive cable sections 40 follow a path corresponding to a main corridor 42 extending between or beside wind turbines 12 of the group. The main corridor 42 is represented here schematically as being straight but it could instead be curved or sinuous along its length. Similarly, the wind turbines 12 of the group are represented here schematically as being arranged in straight parallel arrays or rows to each side of the main corridor 42 but they could instead be divided into other subgroups or arranged in other ways.

Each of the cable sections 40 has a longitudinal or body portion 44 and at least one lateral or leg portion 46, those successive portions 44, 46 being connected integrally in series by a curve or bend 48. In this example, the lateral portions 46 are generally orthogonal to the longitudinal portions 44 and each of those portions 44, 46 is substantially straight apart from where they curve into each other around the bend 48. In other examples, any of the portions 44, 46 could be curved along their length but their radius of curvature would generally be greater than the radius of curvature of any of the bends 48.

When laid on the seabed 28, the longitudinal and lateral portions 44, 46 lie parallel to the seabed 28 and therefore are nominally in a horizontal plane, to the extent that the seabed 28 is nominally horizontal and flat.

In this example, each cable section 40 has a lateral portion 46 at each end of the longitudinal portion 44 and the respective bends 48 that join those portions 44, 46 are in mutual opposition. Thus, the lateral portions 46 extend in opposite lateral directions on the seabed 28 and so, in a general sense, each cable section 40 is S-shaped.

It will be apparent from Figure 4 that the successive cable sections 40 alternate in orientation between S and reverse-S shapes in plan view. Consequently, neighbouring lateral portions 46 at facing ends of the longitudinal portions 44 extend in the same lateral direction as a pair. Each pair of lateral portions 46 extends laterally to and connects to a respective one of the junction boxes 38. A dynamic cable 14 extends to a further lateral extent from each junction box 38.

In the examples shown, the neighbouring lateral portions 46 are separate and parallel. In other examples, the lateral portions 46 may be non-parallel, for example outwardly convergent, or could be attached to each other.

The longitudinal portion 44 of each cable section 40 extends longitudinally along, lies within and follows the path of the main corridor 42. Also, the longitudinal portion 44 of each cable section 40 is substantially aligned at its ends with the facing ends of the longitudinal portions 44 of adjacent cable sections 40. Thus, all of the longitudinal portions 44 generally follow a common linear path or longitudinal axis 50 that is central to the main corridor 42, whether that axis 50 is straight or curved as determined by the shape of the main corridor 42.

Conversely, the lateral portions 46 of each cable section 40 extend transversely and outwardly relative to the common axis 50 of the longitudinal portions 44. It will be noted that each of the lateral portions 46 extends transversely relative to the adjoining longitudinal portion 44 to a position that is laterally beyond the main corridor 42. At that position, the lateral portion 46 terminates at its outward end at a respective junction box 38.

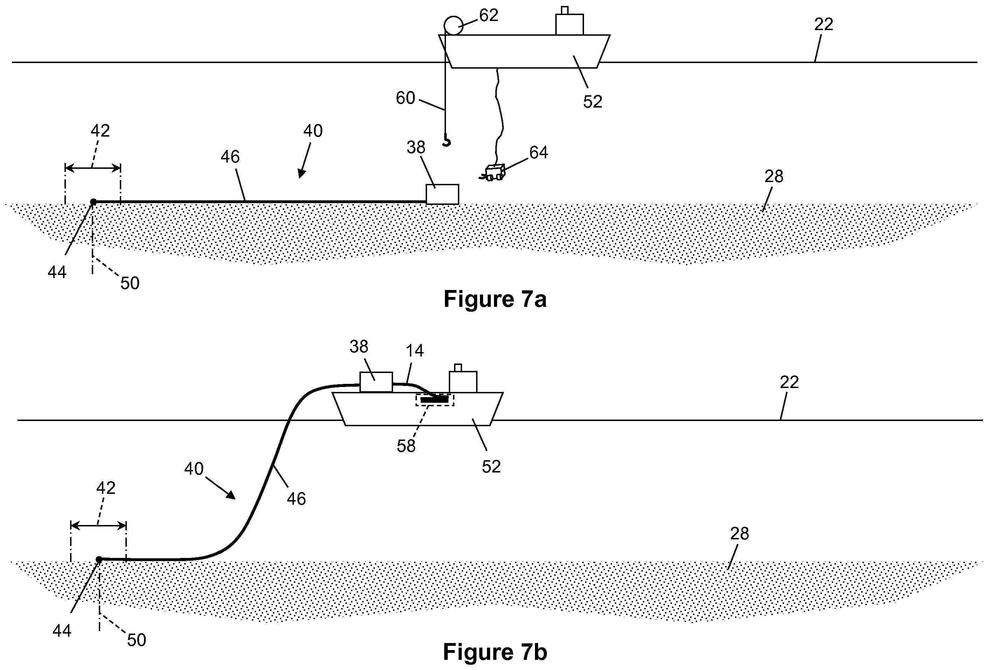

The distance between the common axis 50 of the longitudinal portions 44 and the outward ends of the lateral portions 46 exceeds the water depth at that location. As will be explained with reference to Figures 7a to 7d, this overlength is such that the outward end of each lateral portion 46 can be lifted to the surface without significantly disturbing the longitudinal portion 44 that remains on the seabed 28 at the inward end or root of the lateral portion 46. The lateral portion 46 then hangs temporarily between the surface and the seabed 28 as a catenary.

Similarly, the lengths of the dynamic cables 14 also exceed the water depth. This allows the outward end of each dynamic cable 14 to be lifted to the surface without significantly disturbing the junction box 38 that remains on the seabed 28 at the inward end or root of the dynamic cable 14. Again, as noted above, the dynamic cables 46 then hang between the surface and the seabed 28 as catenaries, suspended at their upper ends from respective wind turbines 12.

The cable sections 40 are made of static export cable that may, for example, comprise conductors with a total cross-sectional area of 1200mm². In contrast, each dynamic cable may comprise conductors with a total cross-sectional area of 300mm². Beneficially, the length of the lateral portions 46 of less expensive static cable reduces the length and hence the cost of the more expensive dynamic cable 14 that is required to effect connections between the wind turbines 12 and the static export cable extending in sections 40 along the main corridor 42.

Usually, the longitudinal portion 44 of each cable section 40 will be substantially longer than the or each lateral portion 46. The drawings are not to scale but in practical examples, the longitudinal portion 44 could be 1km or more in length whereas the lateral portions 46 and the dynamic cables 14 could each be about 200m long depending upon the water depth. In one example, each lateral portion 46 could extend 200m beyond the bend 48 and each dynamic cable could be 220m long. The overall length of static cable in each cable section 40 may therefore be about 1.5km, allowing for the combined lengths of the longitudinal portion 44, the lateral portions 46 and the bends 48.

In another point of difference over conventional fishbone cabling arrangements as illustrated in Figure 2, the junction boxes 38 shown in Figure 4 are dry connectors as opposed to wet connectors 18. This means that the connections made within the junction boxes 38 between the cable sections 40 and the dynamic cables 14 are made above the surface in a dry environment before the junction boxes 38 are sealed and lowered to the seabed 28.

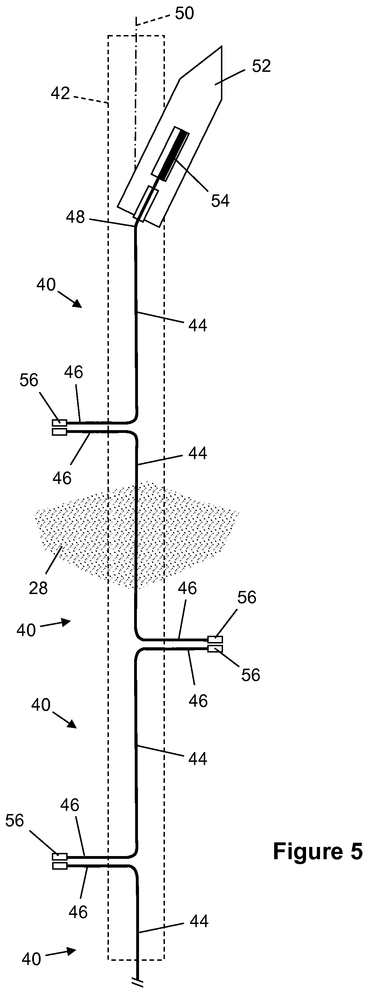

The installation sequence of the arrangement shown in Figure 4 will now be explained with reference to Figures 5, 6 and 7a to 7d.

In Figure 5, an installation vessel 52 is shown laying a series of cable sections 40 on the seabed 28 in longitudinal succession along the along the main corridor 42. The cable sections 40 may, for example, be unspooled from a reel 54 aboard the vessel 52 as shown. Conveniently, the successive cable sections 40 can all be stored on the same reel 54 end-to-end.

The installation vessel 52 is shown proceeding along the main corridor 42 while diverting from the common axis 50 along a path that corresponds to the shape of a cable section 40 in the process of being laid. Specifically, the vessel 52 is shown having laid a first lateral portion 46 and the longitudinal portion 44 of a cable section 40 and is now turning around a bend 48 to lay the second lateral portion 46 of that cable section 40. Previously laid cable sections 40 are also shown in Figure 5. The lateral portions 46 of each cable section 40 suitably terminate in end connectors 56.

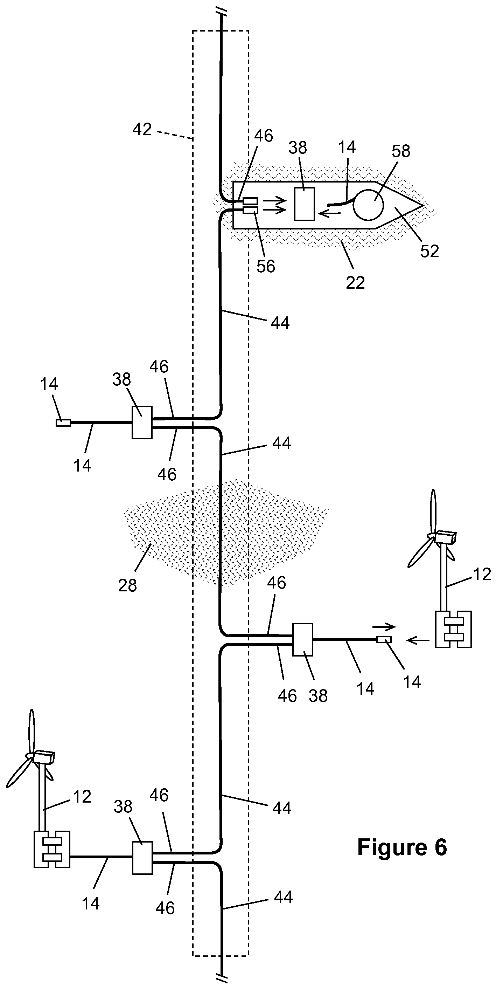

Figure 6 illustrates subsequent steps of the installation sequence, expressed in chronological order from top to bottom. To do so conveniently in a single diagram, Figure 6 shows different installation steps being performed at the respective locations of the various wind turbines 12 shown in Figure 4. In practice, different installation steps would not necessarily be performed simultaneously at those different locations. Nor is it essential to perform these successive installation steps at successive wind turbines 12 of the group, although this may be convenient in practice to minimise travel distance and to make best use of marine assets such as installation vessels 52.

At the first location shown at the top of Figure 6, an installation vessel 52 is shown having recovered a pair of lateral portions 46 of neighbouring cable sections 40 to the surface 22 from the seabed 28. End connectors 56 of those lateral portions 46 are shown here being connected with a junction box 38 aboard the vessel 52. Correspondingly, a dynamic cable 14 stored aboard the vessel 52, for example in a carousel 58, is also connected to the junction box 38. The junction box 38 thereby connects the cable sections 40 to each other via the pair of lateral portions 46 while also connecting the dynamic cable 14 to the cable sections 40. All of those connections are made in a dry environment above the surface 22, whereupon the junction box 38 is sealed to be watertight.

After this, at the second location shown in Figure 6, the pair of lateral portions 46 are shown returned or abandoned to the seabed 18, together with the junction box 38 to which they are connected and the dynamic cable 14 also connected to the junction box 38. It will be noted that the free end of the dynamic cable 14 may also be equipped with an end connector 56 as shown.

Next, at the third location shown in Figure 6, the dynamic cable 14 is shown being lifted from the seabed 28 to be connected to a wind turbine 12. This completes the connection of the wind turbine 12 to the series of cable sections 40 as shown at the fourth location at the bottom of Figure 6.

The movements and shapes of parts of the cable sections 40 and the dynamic cables 14 are illustrated in more detail in the side views of Figures 7a to 7d. In this example, however, the junction box 38 is preliminarily installed on the seabed 28 previously dry-connected to a pair of lateral portions 46 of a cable section 40. Thus, the junction box 38 is recovered to the surface 22 together with the attached lateral portions 46.

Figure 7a shows an installation vessel 52 on the surface 22 about to perform the recovery operation by using a lifting line 60 paid out from a winch 62, assisted by an ROV 64. The lateral portions 46 of the cable section 40 attached to the junction box 38 are shown extending laterally across the seabed 28. The position of the longitudinal portion 44 is also shown, coincident with the common axis 50 that extends centrally along the main corridor 42 as also shown in Figures 4 and 5.

Figure 7b shows the junction box 38 now lifted aboard the vessel 52. An end of the dynamic cable 14 is drawn from the carousel 58 to be connected to the junction box 38 in dry conditions. It will be noted that the lateral portions 46 of the cable section 40 attached to the junction box 38 hang as a catenary in the water column between the surface 22 and the seabed 28. However, only an outboard part of the lateral portions 46, adjoining the junction box 38, has that catenary curvature. The inboard part of the lateral portions 46, adjoining the longitudinal portion 44, remains lying substantially flat on the seabed 28. Thus, a majority of the length of the static cable section 40 remains undisturbed while the necessary connections are made aboard the vessel 52 in dry conditions. Preferably, as shown, the outboard catenary part of the lateral portions 46 does not extend inboard as far as the boundary of the main corridor 42, hence terminating outboard of that boundary.

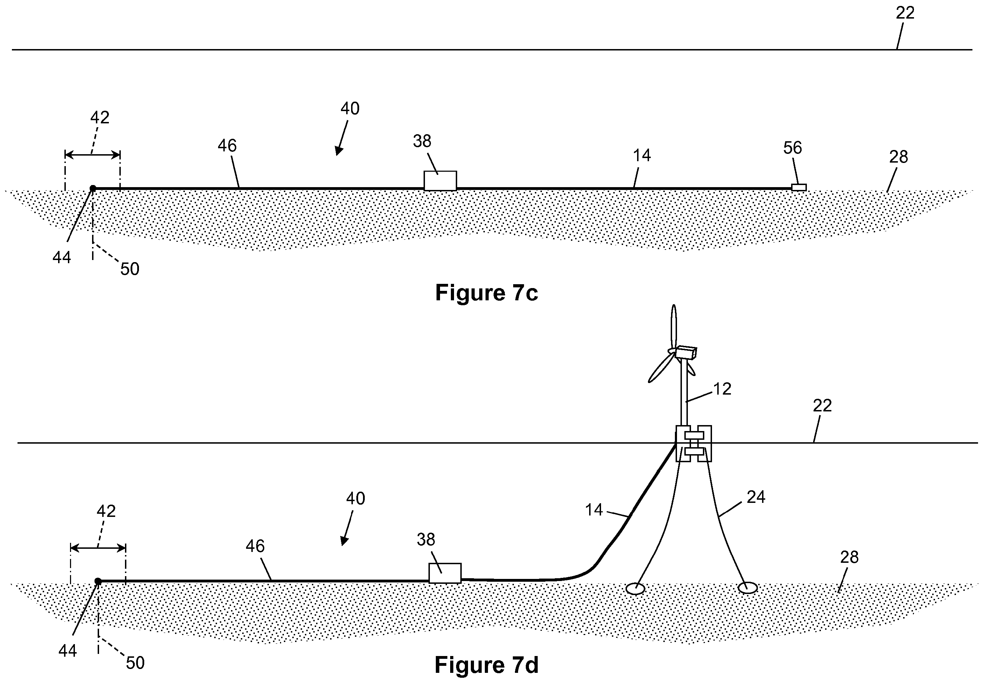

Figure 7c shows the lateral portions 46 of the cable section 40 and the junction box 38 now returned to the seabed 28 together with the dynamic cable 14. The lateral portions 46 of the cable section 40 are now lying flat on the seabed 28 once again and the cable section 40 need not be disturbed further. The dynamic cable 14 also lies flat on the seabed 28 ready for subsequent connection to a wind turbine 12 that may be moored in position later, as shown in Figure 7d. However, if an immediate connection to an already moored wind turbine 12 is required, the dynamic cable 14 may not be abandoned on the seabed 28 as an interim measure but could instead be connected directly to the wind turbine 12.

Figure 7d shows a wind turbine 12 moored to the seabed 28 with catenary moorings 24. The dynamic cable 14 is now connected to the wind turbine 12, hanging as a catenary in the water column between the surface 22 and the seabed 28. Again, only an outboard part of the dynamic cable 14, adjoining the wind turbine 12, has that catenary curvature. The inboard part of the dynamic cable 14, adjoining the junction box 38, remains lying substantially flat on the seabed 28. Thus, the junction box 38 and the static cable section 40 remain isolated from, and undisturbed by, motion of the dynamic riser 14.

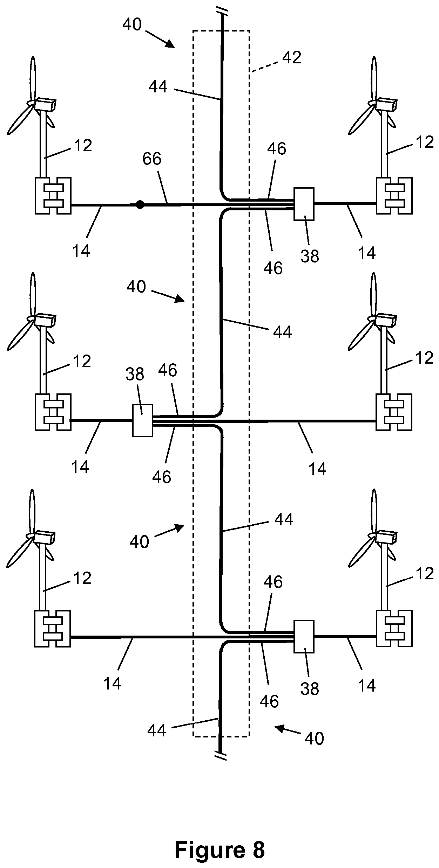

Many variations are possible within the inventive concept. For example, Figure 8 corresponds to Figure 4 but shows a variant in which each junction box 38 is connected to more than one dynamic cable 14. This allows additional wind turbines 12 to be added with only a minor increase in cabling and connections.

In the example shown in Figure 8, the additional dynamic cables 14 are laid compactly in a gap between the paired lateral portions 46 of neighbouring cable sections 40.

In some cases, the additional dynamic cables 14 may be connected to a junction box 38 only indirectly so as to minimise their length and cost, hence being connected to the junction box 38 via an intermediate length of less expensive static cable 66 joined in series. This possibility is shown uppermost in Figure 8.

## Claims

1. A subsea inter-array cable layout, comprising:
a series of two or more discrete cable sections (40) extending in longitudinal succession along a common path (42), each cable section (40) comprising at least one longitudinal portion (44) and at least one lateral portion (46), wherein the longitudinal portions (44) of the cable sections (40) extend along the path (42) and lateral portions (46) of mutually adjacent cable sections (40) in the series extend laterally from the path (42) to the same side of the path (42) as a pair;
a connection device (38) that connects to the lateral portions (46) of the pair to interconnect the adjacent cable sections (40) and that is spaced from the longitudinal portions (44) by a distance greater than the local water depth; and
at least one additional cable (14) connected to and extending from the connection device (38) wherein the or each additional cable (14) comprises a section of dynamic cable whose length also exceeds the local water depth.

2. The layout of Claim 1, wherein the or each additional cable (14) also comprises an inboard section of static cable in series with the section of dynamic cable.

3. The layout of any preceding claim, wherein the or each additional cable (14) extends from the connection device (38) to a floating surface unit as a catenary and a portion of the additional cable (14) adjoining the connection device (38) lies on the seabed (28).

4. The layout of any preceding claim, wherein the or each additional cable (14) extends from the connection device (38) in a lateral direction with respect to the longitudinal portions (44) of the cable sections.

5. The layout of any preceding claim, wherein each cable section (40) comprises a length of static cable.

6. The layout of any preceding claim, wherein the lateral portions (46) of the pair are substantially parallel.

7. The layout of any preceding claim, wherein the lateral portions (46) are separate along their lengths extending from the longitudinal portions (44) to the connection device (38).

8. The layout of Claim 7, wherein at least one of the additional cables (14) extends between the lateral portions (46) of the pair.

9. The layout of any preceding claim, wherein the connection device (38) is configured for dry connection of the lateral portions (46) and the additional cable (14).

10. The layout of any preceding claim, wherein a cable bend (48) joins the or each longitudinal portion (44) to the at least one lateral portion (46) of each cable section (40).

11. The layout of any preceding claim, wherein the at least one lateral portion (46) extends laterally from an end of the or each longitudinal portion (44) and each cable section (40) comprises a longitudinal portion (44) disposed between lateral portions (46) at each end, those lateral portions (46) extending from the longitudinal portion (44) in mutually opposed lateral directions.

12. The layout of any preceding claim, wherein the or each longitudinal portion (44) of each cable section (40) is substantially aligned at its ends with facing ends of the longitudinal portions (44) of adjacent cable sections (40) in the series.

13. The layout of any preceding claim, wherein the or each longitudinal portion (44) of each cable section (40) is at least four times longer than the or each lateral portion (46) of each cable section (40).

14. A marine installation for generating electrical power from a renewable source, the installation comprising at least one cable layout of any preceding claim.

15. A method of installing a subsea inter-array cable layout, the method comprising:
laying a series of two or more discrete cable sections (40) on the seabed (28) to extend in longitudinal succession along a common path (42), each cable section (40) comprising at least one longitudinal portion (44) and at least one lateral portion (46), wherein the longitudinal portions (44) of the cable sections (40) extend along the path (42) and lateral portions (46) of mutually adjacent cable sections (40) in the series extend laterally from the path (42) to the same side of the path (42) as a pair;
lifting outboard ends of the pair of lateral portions (46) above the surface (22) without lifting the longitudinal portions (44) from the seabed (28);
effecting dry connection of the lateral portions (46) of the pair to a connection device (38) above the surface (22); and
lowering the connection device (38) and the lateral portions (46) to the seabed (28).

16. The method of Claim 15, comprising forming a catenary in an outboard part of the lateral portions (46) when lifting their outboard ends above the surface (22), while leaving an inboard part of the lateral portions (46), adjoining the longitudinal portions (44), on the seabed (28).

17. The method of Claim 15 or Claim 16, further comprising effecting dry connection of at least one additional cable (14) to the connection device (38) when connecting the lateral portions (46) to the connection device (38) above the surface (22), and lowering the or each additional cable (14) to the seabed (28) connected to the connection device (38).

18. The method of Claim 17, comprising lifting a free end of the or each additional cable (14) from the seabed (28) to a unit floating at the surface (22) and connecting the additional cable (14) to the floating unit while forming a catenary in an outboard part of the or each additional cable (14) when lifting its outboard end from the seabed (28) and leaving an inboard part of the or each additional cable (14), adjoining the connection device (38), on the seabed (28).

19. The method of Claim 17 or Claim 18, comprising providing the or each additional cable (14) in the form of a dynamic cable.

20. The method of Claim 17 or Claim 18, comprising providing the or each additional cable (14) in the form of a length of dynamic cable in series with a length of static cable.

21. The method of any of Claims 15 to 20, comprising providing each cable section (40) in the form of a static cable.

## Patentansprüche

1. Untersee-Inter-Array-Kabelanordnung, umfassend:
eine Reihe von zwei oder mehr diskreten Kabelstrecken (40), die sich in längslaufender Folge entlang eines gemeinsamen Pfads (42) erstrecken, wobei jede Kabelstrecke (40) mindestens einen längslaufenden Abschnitt (44) und mindestens einen querlaufenden Abschnitt (46) umfasst, wobei sich die längslaufenden Abschnitte (44) der Kabelstrecken (40) entlang des Pfads (42) erstrecken und sich querlaufende Abschnitte (46) zueinander benachbarter Kabelstrecken (40) in der Reihe als Paar seitlich von dem Pfad (42) auf dieselbe Seite des Pfads (42) erstrecken;
eine Verbindungsvorrichtung (38), die mit den querlaufenden Abschnitten (46) des Paars verbunden ist, um die benachbarten Kabelstrecken (40) miteinander zu verbinden, und die von den längslaufenden Abschnitten (44) um einen Abstand größer als die örtliche Wassertiefe beabstandet ist; und
mindestens ein zusätzliches Kabel (14), das mit der Verbindungsvorrichtung (38) verbunden ist und sich davon erstreckt, wobei das oder jedes zusätzliche Kabel (14) eine Strecke dynamischen Kabels umfasst, deren Länge ebenfalls die örtliche Wassertiefe überschreitet.

2. Anordnung nach Anspruch 1, wobei das oder jedes zusätzliche Kabel (14) außerdem eine innenliegende Strecke statischen Kabels in Reihe mit der Strecke dynamischen Kabels umfasst.

3. Anordnung nach einem der vorangehenden Ansprüche, wobei sich das oder jedes zusätzliche Kabel (14) als Seilkurve von der Verbindungsvorrichtung (38) zu einer schwimmenden Oberflächeneinheit erstreckt und ein an die Verbindungsvorrichtung (38) angrenzender Abschnitt des zusätzlichen Kabels (14) auf dem Meeresboden (28) liegt.

4. Anordnung nach einem der vorangehenden Ansprüche, wobei sich das oder jedes zusätzliche Kabel (14) in Bezug auf die längslaufenden Abschnitte (44) der Kabelstrecken in einer Querrichtung von der Verbindungsvorrichtung (38) erstreckt.

5. Anordnung nach einem der vorangehenden Ansprüche, wobei jede Kabelstrecke (40) ein Stück statischen Kabels umfasst.

6. Anordnung nach einem der vorangehenden Ansprüche, wobei die querlaufenden Abschnitte (46) des Paars im Wesentlichen parallel sind.

7. Anordnung nach einem der vorangehenden Ansprüche, wobei die querlaufenden Abschnitte (46) entlang ihrer sich von den längslaufenden Abschnitten (44) zu der Verbindungsvorrichtung (38) erstreckenden Stücke getrennt sind.

8. Anordnung nach Anspruch 7, wobei sich mindestens eines der zusätzlichen Kabel (14) zwischen den querlaufenden Abschnitten (46) des Paars erstreckt.

9. Anordnung nach einem der vorangehenden Ansprüche, wobei die Verbindungsvorrichtung (38) zur trockenen Verbindung der querlaufenden Abschnitte (46) und des zusätzlichen Kabels (14) konfiguriert ist.

10. Anordnung nach einem der vorangehenden Ansprüche, wobei eine Kabelbiegung (48) den oder jeden längslaufenden Abschnitt (44) an den mindestens einen querlaufenden Abschnitt (46) jeder Kabelstrecke (40) anfügt.

11. Anordnung nach einem der vorangehenden Ansprüche, wobei sich der mindestens eine querlaufende Abschnitt (46) von einem Ende des oder jedes längslaufenden Abschnitts (44) seitlich erstreckt und jede Kabelstrecke (40) einen längslaufenden Abschnitt (44) umfasst, der zwischen querlaufenden Abschnitten (46) an jedem Ende angeordnet ist, wobei sich diese querlaufenden Abschnitte (46) in einander entgegengesetzten seitlichen Richtungen von dem längslaufenden Abschnitt (44) erstrecken.

12. Anordnung nach einem der vorangehenden Ansprüche, wobei der oder jeder längslaufende Abschnitt (44) jeder Kabelstrecke (40) an seinen Enden im Wesentlichen mit gegenüberliegenden Enden der längslaufenden Abschnitte (44) benachbarter Kabelstrecken (40) in der Reihe fluchtet.

13. Anordnung nach einem der vorangehenden Ansprüche, wobei der oder jeder längslaufende Abschnitt (44) jeder Kabelstrecke (40) mindestens viermal länger als der oder jeder querlaufende Abschnitt (46) jeder Kabelstrecke (40) ist.

14. Meeresanlage zum Erzeugen elektrischer Leistung aus einer erneuerbaren Quelle wobei die Anlage mindestens eine Kabelanordnung nach einem der vorangehenden Ansprüche umfasst.

15. Verfahren zum Installieren einer Untersee-Inter-Array-Kabelanordnung, wobei das Verfahren Folgendes umfasst:
Verlegen einer Reihe von zwei oder mehr diskreten Kabelstrecken (40) auf dem Meeresboden (28), um sich in längslaufender Folge entlang eines gemeinsamen Pfads (42) zu erstrecken, wobei jede Kabelstrecke (40) mindestens einen längslaufenden Abschnitt (44) und mindestens einen querlaufenden Abschnitt (46) umfasst, wobei sich die längslaufenden Abschnitte (44) der Kabelstrecken (40) entlang des Pfads (42) erstrecken und sich querlaufende Abschnitte (46) zueinander benachbarter Kabelstrecken (40) in der Reihe als Paar seitlich von dem Pfad (42) auf dieselbe Seite des Pfads (42) erstrecken;
Heben außenliegender Enden des Paars querlaufender Abschnitte (46) über die Oberfläche (22), ohne die längslaufenden Abschnitte (44) von dem Meeresboden (28) zu heben;
Bewirken trockener Verbindung der querlaufenden Abschnitte (46) des Paars mit einer Verbindungsvorrichtung (38) über der Oberfläche (22); und
Absenken der Verbindungsvorrichtung (38) und der querlaufenden Abschnitte (46) auf den Meeresboden (28).

16. Verfahren nach Anspruch 15, umfassend das Bilden einer Seillinie in einem außenliegenden Teil der querlaufenden Abschnitte (46) beim Heben ihrer außenliegenden Enden über die Oberfläche (22), während ein an die längslaufenden Abschnitte (44) angrenzender, innenliegender Teil der querlaufenden Abschnitte (46) auf dem Meeresboden (28) gelassen wird.

17. Verfahren nach Anspruch 15 oder Anspruch 16, ferner umfassend das Bewirken trockener Verbindung mindestens eines zusätzlichen Kabels (14) mit der Verbindungsvorrichtung (38) beim Verbinden der querlaufenden Abschnitte (46) mit der Verbindungsvorrichtung (38) über der Oberfläche (22) und Absenken des oder jedes mit der Verbindungsvorrichtung (38) verbundenen zusätzlichen Kabels (14) auf den Meeresboden (28).

18. Verfahren nach Anspruch 17, umfassend das Heben eines freien Endes des oder jedes zusätzlichen Kabels (14) von dem Meeresboden (28) auf eine an der Oberfläche (22) schwimmende Einheit und Verbinden des zusätzlichen Kabels (14) mit der schwimmenden Einheit, während in einem außenliegenden Teil des oder jedes zusätzlichen Kabels (14) beim Heben seines außenliegendes Endes von dem Meeresboden (28) eine Seillinie gebildet wird, und ein an die Verbindungsvorrichtung (38) angrenzender, innenliegender Teil des oder jedes zusätzlichen Kabels (14), auf dem Meeresboden (28) gelassen wird.

19. Verfahren nach Anspruch 17 oder Anspruch 18, umfassend das Bereitstellen des oder jedes zusätzlichen Kabels (14) in Form eines dynamischen Kabels.

20. Verfahren nach Anspruch 17 oder Anspruch 18, umfassend das Bereitstellen des oder jedes zusätzlichen Kabels (14) in Form eines Stück dynamischen Kabels in Reihe mit einem Stück statischen Kabels.

21. Verfahren nach einem der Ansprüche 15 bis 20, umfassend das Bereitstellen jeder Kabelstrecke (40) in Form eines statischen Kabels.

## Revendications

1. Tracé de câbles inter-réseau sous-marin, comprenant :
un série de deux sections de câble (40) discrètes ou plus s'étendant en succession longitudinale le long d'un trajet (42) commun, chaque section de câble (40) comprenant au moins une portion longitudinale (44) et au moins une portion latérale (46), dans lequel les portions longitudinales (44) des sections de câble (40) s'étendent le long du trajet (42) et des portions latérales (46) de sections de câble (40) mutuellement adjacentes dans la série s'étendent latéralement à partir du trajet (42) du même côté du trajet (42) en paire ;
un dispositif de raccordement (38) qui raccorde les portions latérales (46) de la paire pour raccorder entre elle les sections de câble (40) adjacentes et qui est espacé des portions longitudinales (44) d'une distance supérieure à la profondeur d'eau locale ; et
au moins un câble supplémentaire (14) raccordé au dispositif de raccordement (38) et s'étendant à partir de celui-ci dans lequel le ou chaque câble supplémentaire (14) comprend une section de câble dynamique dont la longueur dépasse également la profondeur d'eau locale.

2. Tracé selon la revendication 1, dans lequel le ou chaque câble supplémentaire (14) comprend également une section intérieure de câble statique en série avec la section de câble dynamique.

3. Tracé selon l'une quelconque des revendications précédentes, dans lequel le ou chaque câble supplémentaire (14) s'étend à partir du dispositif de raccordement (38) jusqu'à une unité de surface flottante sous la forme d'une caténaire et une portion du câble supplémentaire (14) attenante au dispositif de raccordement (38) repose sur le fond marin (28).

4. Tracé selon l'une quelconque des revendications précédentes, dans lequel le ou chaque câble supplémentaire (14) s'étend à partir du dispositif de raccordement (38) dans une direction latérale vis-à-vis des portions longitudinales (44) des sections de câble.

5. Tracé selon l'une quelconque des revendications précédentes, dans lequel chaque section de câble (40) comprend une longueur de câble statique.

6. Tracé selon l'une quelconque des revendications précédentes, dans lequel les portions latérales (46) de la paire sont sensiblement parallèles.

7. Tracé selon l'une quelconque des revendications précédentes, dans lequel les portions latérales (46) sont séparées suivant leur longueur s'étendant à partir des portions longitudinales (44) jusqu'au dispositif de raccordement (38).

8. Tracé selon la revendication 7, dans lequel au moins l'un des câbles supplémentaires (14) s'étend entre les portions latérales (46) de la paire.

9. Tracé selon l'une quelconque des revendications précédentes, dans lequel le dispositif de raccordement (38) est configuré pour un raccordement à sec des portions latérales (46) et du câble supplémentaire (14).

10. Tracé selon l'une quelconque des revendications précédentes, dans lequel un coude de câble (48) joint la ou chaque portion longitudinale (44) à l'au moins une portion latérale (46) de chaque section de câble (40).

11. Tracé selon l'une quelconque des revendications précédentes, dans lequel l'au moins une portion latérale (46) s'étend latéralement à partir d'une extrémité de la ou de chaque portion longitudinale (44) et chaque section de câble (40) comprend une portion longitudinale (44) disposée entre des portions latérales (46) à chaque extrémité, ces portions latérales (46) s'étendant à partir de la portion longitudinale (44) dans des directions latérales mutuellement opposées.

12. Tracé selon l'une quelconque des revendications précédentes, dans lequel la ou chaque portion longitudinale (44) de chaque section de câble (40) est sensiblement alignée à ses extrémités avec des extrémités en regard des portions longitudinales (44) de sections de câble (40) adjacentes dans la série.

13. Tracé selon l'une quelconque des revendications précédentes, dans lequel la ou chaque portion longitudinale (44) de chaque section de câble (40) est au moins quatre fois plus longue que la ou chaque portion latérale (46) de chaque section de câble (40).

14. Installation marine destinée à générer de la puissance électrique à partir d'une source renouvelable, l'installation comprenant au moins un tracé de câbles de l'une quelconque des revendications précédentes.

15. Procédé d'installation d'un tracé de câbles inter-réseau sous-marin, le procédé comprenant :
la disposition d'une série de deux sections de câble (40) discrètes ou plus sur le fond marin (28) pour une extension en succession longitudinale le long d'un trajet (42) commun, chaque section de câble (40) comprenant au moins une portion longitudinale (44) et au moins une portion latérale (46), dans lequel les portions longitudinales (44) des sections de câble (40) s'étendent le long du trajet (42) et des portions latérales (46) de sections de câble (40) mutuellement adjacentes dans la série s'étendent latéralement à partir du trajet (42) du même côté du trajet (42) en paire ;
l'élévation d'extrémités extérieures de la paire de portions latérales (46) au-dessus de la surface (22) sans élévation des portions longitudinales (44) à partir du fond marin (28) ;
la réalisation d'un raccordement à sec des portions latérales (46) de la paire à un dispositif de raccordement (38) au-dessus de la surface (22) ; et
l'abaissement du dispositif de raccordement (38) et des portions latérales (46) jusqu'au fond marin (28).

16. Procédé selon la revendication 15, comprenant la formation d'une caténaire dans une partie extérieure des portions latérales (46) lors de l'élévation de leurs extrémités extérieures au-dessus de la surface (22), tout en laissant une partie intérieure des portions latérales (46), attenante aux portions longitudinales (44), sur le fond marin (28).

17. Procédé selon la revendication 15 ou la revendication 16, comprenant en outre la réalisation d'un raccordement à sec d'au moins un câble supplémentaire (14) au dispositif de raccordement (38) lors du raccordement des portions latérales (46) au dispositif de raccordement (38) au-dessus de la surface (22), et l'abaissement du ou de chaque câble supplémentaire (14) jusqu'au fond marin (28) raccordé au dispositif de raccordement (38).

18. Procédé selon la revendication 17, comprenant l'élévation d'une extrémité libre du ou de chaque câble supplémentaire (14) à partir du fond marin (28) jusqu'à une unité flottante à la surface (22) et le raccordement du câble supplémentaire (14) à l'unité flottante tout en formant une caténaire dans une partie extérieure du ou de chaque câble supplémentaire (14) lors de l'élévation de son extrémité extérieure à partir du fond marin (28) et en laissant une partie intérieure du ou de chaque câble supplémentaire (14), attenante au dispositif de raccordement (38), sur le fond marin (28).

19. Procédé selon la revendication 17 ou la revendication 18, comprenant la fourniture du ou de chaque câble supplémentaire (14) sous la forme d'un câble dynamique.

20. Procédé selon la revendication 17 ou la revendication 18, comprenant la fourniture du ou de chaque câble supplémentaire (14) sous la forme d'une longueur de câble dynamique en série avec une longueur de câble statique.

21. Procédé selon l'une quelconque des revendications 15 à 20, comprenant la fourniture de chaque section de câble (40) sous la forme d'un câble statique.
